Europäisches Patentamt

European Patent Office

Office européen des brevets

(19)

(11) Numéro de publication: **0 091 869**
**B1**

(12) **FASCICULE DE BREVET EUROPEEN**

(45) Date de publication du fascicule du brevet: **26.10.88**

(51) Int. Cl.⁴: **F 24 D 19/10**

(21) Numéro de dépôt: **83400704.9**

(22) Date de dépôt: **06.04.83**

(54) **Ensemble de pompage, tel qu'un circulateur pour installation de chauffage central, à caractéristique hydraulique prédéterminée.**

(30) Priorité: **09.04.82 FR 8206272**

(43) Date de publication de la demande:
**19.10.83 Bulletin 83/42**

(45) Mention de la délivrance du brevet:
**26.10.88 Bulletin 88/43**

(84) Etats contractants désignés:
**BE CH DE GB IT LI NL**

(56) Documents cités:
**FR-A-2 137 388**
**GB-A-2 068 601**

**Pumping Manual, 6. edition, 1979, Trade and Technical Press Ltd. (GB), pages 165-167, 315**

(73) Titulaire: **POMPES SALMSON Société Anonyme à directoire dite:**
**44 Avenue de Chatou Tour Corosa**
**F-92500 Rueil Malmaison (FR)**

(72) Inventeur: **Busson, Gérard**
**THOMSON-CSF SCPI 173, bld Haussmann**
**F-75379 Paris Cedex 08 (FR)**
Inventeur: **Kernous, Michel**
**THOMSON-CSF SCPI 173, bld Haussmann**
**F-75379 Paris Cedex (FR)**

(74) Mandataire: **Hirsch, Marc-Roger et al**
**Cabinet Hirsch 34 rue de Bassano**
**F-75008 Paris (FR)**

EP 0 091 869 B1

Courier Press, Leamington Spa, England.

## Description

La présente invention est relative à un dispositif d'asservissement au débit d'un groupe motopompe à moteur électrique inclus dans une installation de circulation de fluide, ladite pompe ayant pour chaque vitesse de rotation une caractéristique hydraulique propre indépendante de l'installation et dans lequel la vitesse du moteur électrique d'entraînement de la pompe varie en fonction inverse de la variation du débit de la pompe de manière à réduire cette variation de débit, le moteur d'entraînement de la pompe étant un moteur asynchrone branché sur un réseau d'alimentation en courant alternatif.

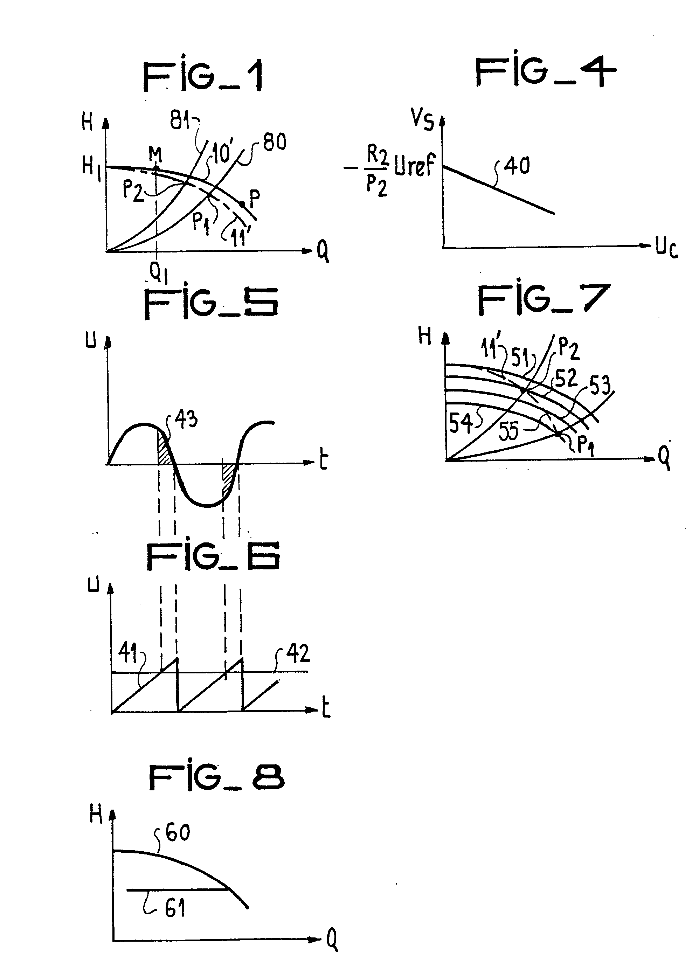

Si la puissance de la pompe est constante, sa caractéristique hydraulique est représentée par la courbe 10 du diagramme de la figure 1 sur lequel on a porté en abscisses le débit Q de liquide, notamment d'eau, dans le circuit associé à cette pompe et en ordonnées la pression H, habituellement mesurée en hauteur d'eau, à la sortie de cette pompe. Le point M de fonctionnement de la pompe se trouve ainsi sur cette courbe 10, sa position c'est-à-dire les valeurs, respectivement $Q_1$ et $H_2$, qui lui sont associées dépendant de la constitution (c'est-à-dire des caractéristiques physiques) du circuit hydraulique. Il est d'ailleurs possible de déplacer ce point de fonctionnement M sur la courbe 10 en faisant varier ces caractéristiques physiques du circuit, par exemple en modifiant le degré d'ouverture d'une vanne dans le circuit.

Mais on a constaté que pour certains points de la courbe 10 le fonctionnement ne donne pas toujours satisfaction. Par exemple, pour le point P, le débit Q a une valeur tellement élevée qu'il entraîne un bruit gênant dans l'installation.

L'ouvrage "Pumping Manual" 6ème édition, 1979, édité par "Trade & Technical Press" Angleterre, pages 165 à 167 et 315, a déjà décrit un procédé pour adapter le fonctionnement d'un ensemble de pompage comprenant une pompe et son moteur d'entraînement, aux caractéristiques du circuit hydraulique associé à cet ensemble, en asservissant la vitesse du moteur au débit de la pompe afin de réduire les pertes d'énergie par rapport à une solution où les variations de débit sont obtenues par variation des pertes de charge du circuit de pompage, notamment, par variation d'une section d'étranglement.

Par ailleurs, le document FR-A-2 137 388 décrit un dispositif et un procédé pour adapter le fonctionnement d'un ensemble de pompage comprenant une pompe et son moteur d'entraînement, notamment un circulateur pour une installation de chauffage central, aux caractéristiques de débit hydraulique désirées, en faisant varier la valeur efficace de la tension d'alimentation du moteur en vue de faire varier la vitesse du moteur électrique afin de conférer à la pompe des caractéristiques hydrauliques prédéterminées. De même, le document GB-A-2 068 601 décrit une installation de chauffage central comportant une pompe de circulation dont la vitesse varie en fonction de la température de l'eau de chauffage ou de la température extérieure ou bien en fonction de la pression à la sortie de la pompe.

Les pompes des installations domestiques et industrielles sont généralement entraînées par des moteurs asynchrones qui, dans leur zone de fonctionnement stable, ne présentent qu'un glissement faible de l'ordre de 10% au maximum car ce glissement induit dans le rotor du moteur des pertes d'énergie par effet Joule qui sont directement proportionnelles à ce glissement. Il s'ensuit que les moteurs asynchrones courants qui entraînent des pompes ne peuvent présenter économiquement que de faibles variatons du glissement et sont quasiment inaptes à la régulation de la vitesse de la pompe.

L'un des buts de la présente invention est précisément de permettre une régulation de débit pratique et économique pour des pompes entraînées par des moteurs asynchrones tout en conservant un bon rendement pour le moteur asynchrone et en utilisant des moyens relativement simples et aisés à mettre en oeuvre. La présente invention repose sur la constatation surprenante qu'une faible diminution de la vitesse d'entraînement de la pompe, obtenue par exemple pour un moteur asynchrone en faisant passer le glissement de 10 à 20%, produit une diminution beaucoup plus importante du couple résistant du rotor de la pompe car ce couple tend à varier comme le carré de la vitesse de rotation de la pompe.

A cet effet, dans le dispositif selon l'invention est interposé entre le moteur de la pompe et son réseau d'alimentation électrique un circuit électronique d'asservissement qui, dès que le débit de la pompe augmente, réduit à chaque période du réseau électrique et par l'intermédiaire d'une alimentation à découpage, la durée pendant laquelle la tension du réseau est disponible pour l'alimentation de ce moteur, de manière à provoquer une augmentation du glissement du rotor du moteur pour rétablir le couple d'entraînement de la pompe et à obtenir ainsi une réduction limitée et concomitante de la vitesse de rotation du moteur électrique.

Selon un autre mode de réalisation du procédé, appliqué au cas où le moteur asynchrone est alimenté par un réseau alternatif qui est relié, via l'alimentation à découpage, à une phase principale et où une phase auxiliaire montée en série avec un condensateur est branchée aux barres du réseau alternatif, de manière à disposer d'un moteur asynchrone monophasé, la tension aux bornes du condensateur de la phase auxiliaire est détectée et est utilisée comme un signal fonction du débit de la pompe et ce signal est adressé, via un circuit de traitement, à un circuit électronique d'asservissement susceptible de provoquer une augmentation du temps de conduction de l'alimentation à découpage lorsque le signal fonction du débit croît, ce qui correspond à une diminution du débit de la pompe.

Ce mode de mise en oeuvre du procédé permet d'obtenir une meilleure régulation de la vitesse du moteur d'entraînement de la pompe car les moteurs asynchrones monophasés présentent un glissement beaucoup plus important que les moteurs asynchrones polyphasés, notamment triphasés, utilisés généralement comme moteurs de puissance du fait de leur moindre coût et de leur meilleur rendement.

Le dispositif pour la mise en oeuvre du procédé selon l'invention est caractérisé en ce qu'il comporte un organe de détection et de traitement de la tension aux bornes dudit condensateur et produisant un signal de débit de la pompe croissant lorsque ledit débit décroît, ce signal étant adressé à un circuit de commande d'une alimentation à découpage, constituée par exemple par un triac, de la phase principale, et le circuit de commande est apte à réguler, en fonction dudit signal, le temps de conduction du triac à chaque alternance, pour obtenir un temps de conduction croissant lorsque ledit signal croît et donc que le débit de la pompe diminue.

Pour réguler la tension d'alimentation du moteur électrique, le circuit de commande de l'alimentation à découpage peut comporter un générateur de signaux en dents de scie qui sont comparés à un signal de régulation décroissant lorsque le signal de vitesse croît et qui sont aptes à déclencher chacun la conduction de l'alimentation à découpage au cours d'une alternance correspondante du courant alternatif lorsque le signal en dents de scie correspondant est supérieur au signal de régulation.

D'autres caractéristiques et avantages de l'invention apparaîtront avec la description de certains de ses modes de réalisation, celle-ci étant effectuée en se référant aux dessins ci-annexés sur lesquels:
- la figure 1 déjà décrite en partie, est un diagramme des caractéristiques hydrauliques d'une pompe classique et d'une pompe selon l'invention;
- la figure 2 est un schéma de circuit de commande d'un ensemble de pompage selon l'invention et des enroulements du moteur d'entraînement;
- la figure 3 montre une partie du circuit de la figure 2; et
- les figures 4 à 8 sont des diagrammes illustrant le fonctionnement d'un ensemble de pompage.

Dans l'exemple, l'ensemble de pompage est un circulateur pour installation de chauffage central, c'est-à-dire une pompe faisant circuler l'eau dans les canalisations.

Le circulateur comprend une pompe entraînée par un moteur électrique asynchrone monophasé comportant, de façon en soi connue, une phase (ou enroulement) principale 15' (figure 2) et une phase (ou enroulement) auxiliaire 16' en série avec un condensateur 17 nécessaire pour permettre le démarrage du moteur.

Les phases principale 15' et auxiliaire 16' ont un point commun relié à une borne 18 d'un réseau d'alimentation en courant alternatif. L'autre borne de l'enroulement 15' est reliée à un conducteur 19 à la masse par l'intermédiaire d'un triac 20. De même l'armature du condensateur 17 opposée à l'enroulement 16' est connectée au conducteur 19.

La seconde borne 21 du réseau est elle aussi reliée au conducteur 19 à la masse.

Le triac 20, en série avec l'enroulement principal 15', constitue l'interrupteur d'une alimentation à découpage. Il est commandé de manière qu'à chaque alternance du courant alternatif il ne soit conducteur que pendant un temps correspondant à la puissance désirée pour le moteur.

Pour la commande de ce triac 20 on prévoit un circuit intégré 22 du type L 120 A ou L 121 de la Société SGS, ATES ou tout autre circuit de commande d'alimentation à découpage.

Dans cet exemple la borne no 7 du circuit 22 est reliée à la gâchette du triac 20 par l'intermédiaire d'une résistance 23.

Selon l'invention la puissance fournie au moteur, c'est-à-dire la durée de fermeture du triac 20 à chaque alternance, est fonction du débit Q de la pompe. En d'autres termes on prévoit un moyen pour faire varier la puissance fournie au moteur en fonction du débit Q. La valeur de la pression H de sortie est ainsi également imposée, c'est-à-dire la caractéristique hydraulique de la pompe.

Dans l'exemple le débit Q est mesuré par la tension $U_c$ aux bornes du condensateur 17 en série avec l'enroulement auxiliaire 16'. A cet effet on prévoit un circuit redresseur 24 transformant la tension alternative aux bornes du condensateur 17 en une tension continue qui est transmise, par l'intermédiaire d'une résistance 25, à l'entrée no 5 du circuit 22.

Le circuit redresseur 24 comprend une diode 26 dont l'anode est reliée au point commun à l'enroulement 16' et au condensateur 17 et dont la cathode est reliée au conducteur 19 à la masse par l'intermédiaire d'une résistance 27 et d'un condensateur 28. Le point commun à la résistance 27 et au condensateur 28 est par ailleurs relié au conducteur 19 grâce à une autre résistance 29 et un autre condensateur 30. Une résistance 31 est en parallèle sur le condensateur 30. La sortie du circuit 24 est constituée par le point commun 32 à la résistance 29 et au condensateur 30.

Comme on le verra plus loin en relation avec les figures 5 et 6, la durée de conduction du triac 20 à chaque alternance dépend du signal appliqué sur l'entrée no 5 du circuit 22.

Cette entrée no 5 est reliée à l'entrée inverseuse (−) d'un amplificateur opérationnel 33 (figure 3) faisant partie du circuit intégré et dont l'entrée non inverseuse (+) est reliée à la borne no 3, du circuit 22 et dont la sortie est connectée à la borne no 2 du même circuit.

A la borne no 5 est également connectée une résistance 34 (figures 2 et 3) elle-même reliée, par son autre extrémité, au curseur ou prise 35 d'un potentiomètre 36 aux bornes duquel est appliquée une tension déterminée. Le potentiel de la prise 35 a ainsi une valeur précise, notée $U_{Ref}$, qui est négative dans l'exemple.

La borne no 5 est également reliée à l'extrémité d'une résistance ajustable 37 dont l'autre extrémité est connectée à la borne no 2 c'est-à-dire à la sortie de l'amplificateur opérationnel 33.

Entre la sortie de l'amplificateur opérationnel 33, c'est-à-dire la borne no 2 du circuit 22, et le conducteur 19 à la masse est installé un filtre constitué par une résistance 38 et un condensateur 39 en série.

Le fonctionnement est le suivant:

le potentiel $V_s$ de la borne no 2 a la valeur suivante:

$$V_s = - U_c \frac{R_3}{P_2} - \frac{R_2}{P_2} U_{Ref} \qquad (1)$$

Dans cette formule $U_c$ est le potentiel du point 32 (figure 2), $R_3$ est la valeur de la résistance 25, $P_2$ est la valeur de la résistance ajustable 37, $R_2$ est la valeur de la résistance 34 et $U_{Ref}$ est le potentiel négatif au point 35.

Le potentiel $V_s$ est ainsi lié au potentiel $U_c$ par une relation linéaire décroissante représentée par la droite 40 du diagramme de la figure 4 où l'on aporté $U_c$ en abscisses et $V_s$ en ordonnées.

A une valeur déterminée de $U_c$ correspond ainsi une valeur déterminée de $V_s$ et, par suite, un temps déterminé de conduction du triac 20 à chaque alternance du courant alternatif fourni par le, réseau. En effet le circuit 22 comporte un générateur (non représenté) de signaux variant en dents de scie en fonction du temps — signaux qui sont représentés par la courbe 41 du diagramme de la figure 6 - appliqués sur la première entrée d'un comparateur (également non représenté et faisant partie du circuit 22) dont la seconde entrée reçoit le signal $V_s$ (droite 42 sur le diagramme de la figure 6) et le triac n'est conducteur que lorsque le signal en dents de scie a une valeur supérieure au signal $V_s$ comme le montre le diagramme de la figure 5 où les zones hachurées 43 correspondent aux instants de conduction du triac 20.

De ce qui précède il résulte que si la courbe de charge hydraulique de l'installation se modifie, passant par exemple de la courbe 80 à la courbe 81 (figure 1) pour laquelle le débit est plus faible, le signal $U_c$ croît d'où il résulte (figure 4) une diminution du signal $V_s$ et donc (figures 5 et 6) une augmentation du temps de conduction du triac à chaque alternance, c'est-à-dire une augmentation de la puissance fournie au moteur. On passe ainsi d'un point $P_1$ à un point $P_2$ sur la courbe 11' de la figure 1.

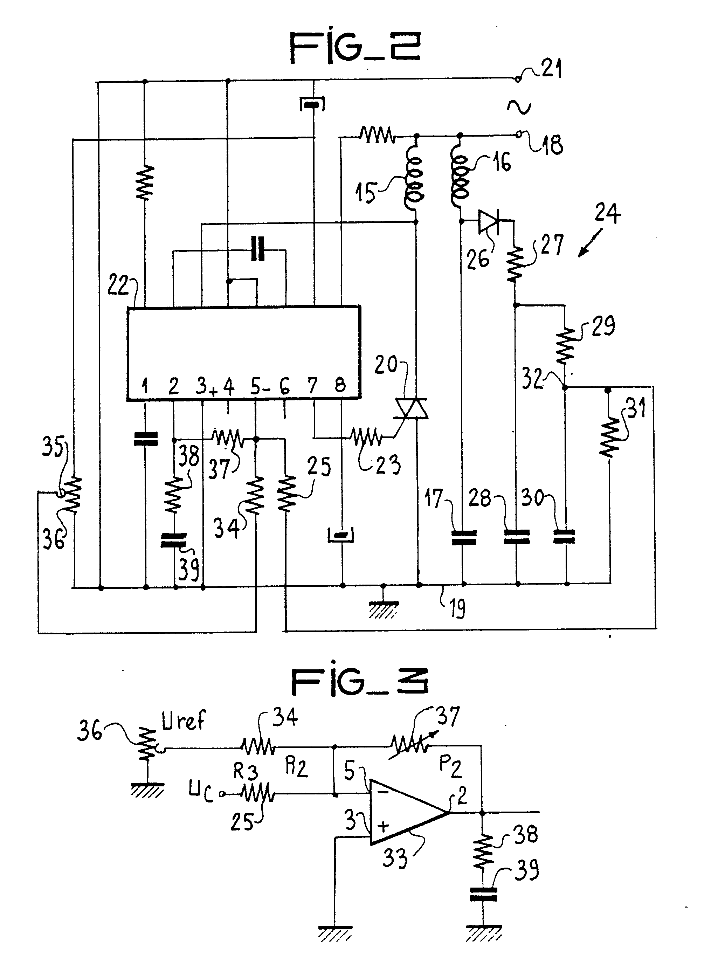

Le fonctionnement peut encore être expliqué avec le diagramme de la figure 7 sur lequel, comme sur la figure 1, on a porté en abscisses le débit Q et en ordonnées la pression H à la sortie de la pompe. La courbe 51 est la courbe hydraulique de la pompe lorsque son moteur est alimenté à pleine puissance, c'est-à-dire à la tension, 220 volts, du réseau. La courbe 52 est la caractéristique hydraulique de la pompe lorsque son moteur est alimenté à puissance inférieure correspondant, par exemple, à une tension moyenne de 200 volts à ses bornes le triac n'étant allumé que pendant une fraction de chaque alternance. La courbe 53 correspond à la courbe 52 mais pour une puissance d'alimentation du moteur encore inférieure. De même la courbe 54 correspond aux caractéristiques hydrauliques de la pompe pour une puissance encore inférieure à la puissance liée à la courbe 53.

Sur ce diagramme de la figure 7 on a également représenté la courbe II' en traits interrompus obtenue avec le circuit de l'invention. Le point $P_1$ (figures 1 et 7) correspond bien à un point de fonctionnement pour lequel la puissance fournie au moteur est inférieure à la puissance correspondant au point de fonctionnement $P_2$, la courbe de charge de l'installation étant bien entendu différente pour ces points $P_1$ et $P_2$.

Le dispositif de l'invention permet de limiter le débit: la partie plongeante 55 de la courbe 11' (figure 7) est telle qu'à de grandes variations de la pression H ne correspondent que de faibles variations du débit Q.

Dans l'exemple précédent, une augmentation du débit, engendrée par une modification de la courbe de charge de l'installation, provoque une diminution de la puissance fournie au moteur. Dans une variante une augmentation du débit correspond à une augmentation de la puissance fournie au moteur d'entraînement de la pompe; une telle variante peut être utile notamment si l'on désire obtenir une pression constante à la sortie de la pompe. Dans ce cas la caractéristique hydraulique de la pompe est représentée par la droite 61 sur la figure 8, la courbe 60 étant la caractéristique de la pompe alimentée à sa puissance maximum.

**Revendications**

1. Dispositif d'asservissement au débit d'un groupe motopompe à moteur électrique inclus dans une installation de circulation de fluide, ladite pompe ayant pour chaque vitesse de rotation une caractéristique hydraulique propre indépendante de l'installation et dans lequel la vitesse du moteur électrique d'entraînement de la pompe varie en fonction inverse de la variation du débit de la pompe de manière à réduire cette variation de débit, le moteur d'entraînement de la pompe étant un moteur asynchrone branché sur un réseau d'alimentation en courant alternatif, caractérisé en ce qu'est interposé entre le moteur de la pompe et son réseau d'alimentation électrique un circuit électronique d'asservissement (22) qui, dès que le débit de la pompe augmente, réduit à chaque période du réseau électrique et par l'intermédiaire d'une alimentation à découpage (20), la durée pendant laquelle la tension du réseau est disponible pour l'alimentation de ce moteur, de manière à provoquer une augmentation du glissement du rotor du moteur pour rétablir le couple d'entraînement de la pompe et à obtenir ainsi une réduction limitée et concomitante de la vitesse de rotation du moteur électrique.

2. Dispositif selon la revendication 1, appliqué au cas où le moteur asynchrone est alimenté par un réseau alternatif qui est relié, via l'alimentation à découpage (20), à une phase principale (15) et où une phase auxiliaire (16) montée en série avec un condensateur (17) est branchée aux bornes (18, 21) du réseau alternatif, de manière à disposer d'un moteur asynchrone monophasé, caractérisé en ce que la tension (Uc) aux bornes du condensateur (17) de la phase auxiliaire est détectée et est utilisée comme un signal fonction du débit (Q) de la pompe et ce signal (Uc) est adressé, via un circuit de traitement (24 à 37), à un circuit électronique d'asservissement (22) susceptible de provoquer une augmentation du temps de conduction de l'alimentation à découpage (20) lorsque le signal fonction du débit (Uc) croît, ce qui correspond à une diminution du débit de la pompe.

3. Dispositif selon la revendication 2, caractérisé en ce qu'il comporte un organe (24 à 37) de détection et de traitement de la tension aux bornes dudit condensateur (17) et produisant un signal de débit de la pompe (Uc) croissant lorsque ledit débit décroît, ce signal étant adressé à un circuit (22) de commande d'une alimentation à découpage, constituée par exemple par un triac (20) de la phase principale (15), et en ce que le circuit de commande (22) est apte à réguler (droite 40), en fonction dudit signal (Uc), le temps de conduction du triac (20) à chaque alternance, pour obtenir un temps de conduction croissant lorsque ledit signal (Uc) croît et donc que le débit (Q) de la pompe diminue.

4. Dispositif selon la revendication 3, caractérisé en ce que le circuit (22) de commande de l'alimentation à découpage (20) comporte un générateur de signaux en dents de scie (41) qui sont comparés à un signal de régulation (Vs droite 42) décroissant lorsque le signal de vitesse (Uc) croît (droite 40) et qui sont aptes à déclencher chacun la conduction de l'alimentation à découpage (20) au cours d'une alternance correspondante du courant alternatif lorsque le signal en dents de scie correspondant (41) est supérieur au signal de régulation (Vs — droite 42).

**Patentansprüche**

1. Vorrichtung zur durchsatzabhängigen Steuerung einer einer Mediumumlaufeinrichtung beigeordneten, einen Elektromotor aufweisenden Kraftpumpeneinheit, bei der die Pumpe für jeden Drehgeschwindigkeitswert eine besondere, von der Einrichtung unabhängige, hydraulische Kennlinie besitzt und die Drehgeschwindigkeit des die Pumpe antreibenden Elektromotors umgekehrt proportional zur Änderung der Durchsatzmenge der Pumpe veränderlich ist, um die Durchsatzänderung zu vermindern, und wobei der die Pumpe antreibende Motor ein Asynchronmotor ist, der von einem Wechselstromnetz gespeist wird, dadurch gekennzeichnet, dass zwischen dem Pumpenmotor und dessen elektrischem Stromspeisenetz ein elektronischer Steuerkreis (22) vorgesehen ist, der bei Erhöhung des Durchsatzes der Pumpe bei jeder Periode des Speisenetzes vermittels einer Stoss-Speisung (20) die Zeitspanne, während welcher die Spannung des Netzes für die Speisung des Motors verfügbar ist, vermindert, um somit das Gleiten des Motor-Rotors zu erhöhen und dadurch das Antriebsmoment der Pumpe wiederherzustellen und gleichzeitig die Drehgeschwindigkeit des Elektromotors in begrenztem Mass zu vermindern.

2. Vorrichtung nach Anspruch 1, bei der der Ansynchronmotor von einem Wechselstromnetz gespeist wird, welches über die Stoss-Speisung (20) an eine Hauptphase (15) angeschlossen ist und eine Hilfsphase (16) in Serienschaltung mit einem Kondensator (17) an die Klemmen (18, 21) des Wechselstromnetzes angeschlossen ist, derart, dass ein einphasiger Asynchronmotor vorliegt, dadurch gekennzeichnet, dass die Hilfsphasen-Spannung (Uc) an den Klemmen des Kondensators (17) abgenommen und als pumpendurchsatzabhängiges (Q) Signal verwendet wird, wobei dieses Signal (Uc) über einen Auswertungsstromkreis (24 bis 37) an einen elektronischen Steuerkreis (22) abgegeben wird, der dazu geeignet ist, die Leitdauer der Stoss-Speisung (20) zu erhöhen, wenn das durchsatzabhängige Signal (Uc) ansteigt, wodurch sich eine Verminderung des Durchsatzes der Pumpe ergibt.

3. Vorrichtung nach Anspruch 2, dadurch gekennzeichnet, dass sie ein Fühler- und Auswertungsorgan (24 bis 37) zum Abnehmen und Auswerten der Klemmenspannung des Kondensators (17) aufweist, welches Organ ein Pumpendurchsatzsignal (Uc) abgibt, das anwächst, wenn der Durchsatz absinkt und das an einen Stromkreis (22) angelegt wird, der eine Stoss-Speisung steuert, welche beispielsweise durch eine Dreipolschaltung (20) der Hauptphase (15) gebildet wird, und dass der Steuerstromkreis (22) dazu geeignet ist, die Dauer des Leitfähigkeitszustands der Dreipolschaltung (20) bei jedem Polaritätswechsel in Abhängigkeit vom Signal (Uc) zu regulieren (Gerade 40), zwecks Erzielung einer Ansteigenden Dauer des Leitfähigkeitszustands, wenn das Signal (Uc) ansteigt und somit der Durchsatz (Q) der Pumpe absinkt.

4. Vorrichtung nach Anspruch 3, dadurch gekennzeichnet, dass der Stoss-Speisungs (20)-Steuerkreis (22) einen Sägezahnsignalerzeuger (40) umfasst, dessen Sägezahnsignale mit einem abfallenden Reguliersignal (Vs — Gerade 42) verglichen werden, wenn das Geschwindigkeitssignal (Uc) ansteigt (Gerade 42), wobei jedes dieser Sägzahnsignale den Leitfähigkeitszustand der Stoss-Speisung (20) während einer entsprechenden Wechselphase des Wechselstroms auslöst, wenn der Pegel des entsprechenden Sägezahnsignals (41) höher ist als derjenige des Reguliersignals (Vs — Gerade 42).

**Claims**

1. Servo-control device for controlling a motor-pump unit as a function of its flow-rate, said pump unit comprising an electric motor and being included in a fluid circulation system, said pump having for each rotational speed value a definite hydraulic characteristic independent from said system, and wherein the speed of the electric motor driving said pump varies in inverse ratio to the variations of the flow rate of said pump so as to minimize said flow rate variations, said pump driving motor being an asynchronous motor connected to an AC feeding grid, characterized in that between the pump motor and its electric feeding grid an electronic servo-circuit is interposed which when the flow rate of the pump increases, reduces at each period of the electric grid and through the intermediary of a chopper supply (20) the time period during which the voltage of said grid is available for feeding said motor, so as to cause an increase of the shifting of the rotor of said motor with a view to restablishing the pump driving torque and to thus obtaining a limited and concomitant reduction of the rotational speed of said electric motor.

2. Device according to claim 1, as applied when said asynchronous motor is fed from an AC grid connected through said chopper supply (20) to a main phase (15), and when an auxiliary phase (16) connected in series with a capacitor (17) is connected to the terminals (18, 21) of said AC grid, so as to provide a single-phase asynchronous motor, characterized in that the voltage (Uc) across the terminals of said capacitor (17) of said auxiliary phase is sensed and is used as a signal correponding to the flow rate (Q) of the pump, said signal (Uc) being transmitted by a processing circuit (24 to 37) to an electronic servo circuit (22) adapted to increase the duration of the conductive state of said chopper supply (20) when the signal corresponding to the flow rate (Uc) increases, which corresponds to a decrease of the flow rate of said pump.

3. Device according to claim 2, characterized in that it comprises a member (24 to 37) for sensing and processing the voltage across the terminals of said capacitor (17) and for producing a pump flow rate signal (Uc) which increases as the flow rate decreases, said signal being transmitted to the control circuit (22) of a chopper supply constituted, for instance, by a triac (20) of the main phase (15), and in that said control circuit (22) is adapted to regulate (straight line 40) as a function of said signal (Uc) the current duration of the conductive state of said triac (20) for each alternation so as to obtain an increasing duration of the conductive state when said signal increases, i.e. when the flow rate of said pump decreases.

4. Device according to claim 3, characterized in that said control (or piloting) circuit (22) of said chopper supply (20) comprises a saw-tooth signal generator (41), the saw-tooth signals being compared to a regulation signal (Vs — straight line 42) which decreases when the speed signal (Uc) increases (straight line 40), and said saw-tooth signals being adapted each to trigger the conductive state of said chopper supply during a corresponding alternation of the AC when the related saw-tooth signal (41) has a level higher than that of said regulation signal (Vs — straight line 42).

# FIG_1

H

H₁

M

81

10'

80

P₂

P₁

P

11'

Q₁

Q

# FIG_4

V_S

$-\dfrac{R_2}{P_2} U_{ref}$

40

U_C

# FIG_5

U

43

t

# FIG_7

H

11'   51   P₂

52   53

54   55

P₁

Q

# FIG_6

U

41

42

t

# FIG_8

H

60

61

Q

FIG_2

FIG_3